## Europäisches Patentamt
## European Patent Office
## Office européen des brevets

(19)

(11) Veröffentlichungsnummer: **0 181 946**
**B1**

(12)

# EUROPÄISCHE PATENTSCHRIFT

(45) Veröffentlichungstag der Patentschrift:
06.03.89

(51) Int. Cl.⁴: **G 01 G 17/00,** G 01 G 15/00

(21) Anmeldenummer: 84113592.4

(22) Anmeldetag: 10.11.84

(54) Einrichtung zum Entnehmen und Wiegen insbesondere von Tabletten.

(43) Veröffentlichungstag der Anmeldung:
28.05.86 Patentblatt 86/22

(45) Bekanntmachung des Hinweises auf die Patenterteilung:
06.03.89 Patentblatt 89/10

(84) Benannte Vertragsstaaten:
AT BE CH DE FR GB IT LI

(56) Entgegenhaltungen:
DE-A-3 118 756
FR-A-2 270 958
GB-A-1 571 270
US-A-2 781 995
US-A-3 776 324
US-A-3 921 821

Die Akte enthält technische Angaben, die nach
dem Eingang der Anmeldung eingereicht wurden
und die nicht in dieser Patentschrift enthalten sind.

(73) Patentinhaber: **Wilhelm Fette GmbH, Postfach 1180
Grabauerstrasse 24, D-2053 Schwarzenbek (DE)**

(72) Erfinder: **Hinzpeter, Jürgen, Ing.grad., Aubenas-
Strasse 15, D-2053 Schwarzenbek (DE)**

(74) Vertreter: **Minetti, Ralf, Dipl.- Ing., Ballindamm 15,
D-2000 Hamburg 1 (DE)**

EP 0 181 946 B1

**Beschreibung**

Die Erfindung betrifft eine Einrichtung zum Entnehmen und Wiegen insbesondere Tabletten mit einem in den Tablettenstrom schwenkbaren Arm für die Abführung einzelner Tabletten in einen Behälter.

Seit den Anfängen der Tablettenherstellung ist die Überwachung der Qualität von besonderer Bedeutung. Dafür reicht es bei der langsam laufenden Presse aus, Stichproben von Hand zu ziehen und auszuwerten. Bei schnell laufenden Pressen erfolgt eine Überwachung der Herstellung über die Kontrolle der Preßkräfte, die aufgewandt werden für die Herstellung einer einzelnen Tablette. Wird die überwachte Preßkraft in engen Grenzen gehalten, so ist die Wahrscheinlichkeit gegeben, daß auch die drei entscheidenden Parameter erfüllt sind, nämlich Gewicht, Festigkeit und Zerfallgeschwindigkeit der produzierten Tabletten, da Festigkeit und Zerfallgeschwindigkeit nahezu ausschliesslich von der Preßkraft abhängen. Eine Preßkraft-Überwachung und -Nachregelung enthält jedoch noch zwei Unwägbarkeiten. Zum einen gibt es keine strenge Korrelation zwischen Preßkraft und Tablettengewicht, zum anderen kann das Preßkraftmeßsystem defekt sein und zu einer nicht korrekten Nachregelung führen, durch welche das Gewicht der hergestellten Tabletten fehlerhaft beeinflußt ist.

Da eine genaue Korrelation nicht erreichbar scheint, ist es nach wie vor notwendig, Stichproben für eine genaue Ermittlung der Tablettengewichte zu ziehen und zwar in mehr oder weniger großen zeitlichen Abständen. Derartige Stichproben müssen hohe Anforderungen erfüllen, insbesondere müssen sie sicher gezogen, schnell ausgewertet und genau zugeordnet werden können unter einem möglichst geringem wirtschaftlichen Aufwand.

Nach der DE-A-3 118 756 ist es bekannt, für die Entnahme einzelner Tabletten zum Zwecke des Wiegens eine schwenkbare Weiche am Rande des Tablettenstromes anzuordnen, durch deren Betätigung eine Teilmenge an Tabletten in eine Entnahmekammer geleitet wird, aus der mittels einer weiteren schwenkbar gelagerten Tasche eine einzelne Tablette in einen Auffangbehälter überführt werden kann, um sie danach einer Waage zur Überprüfung zuzuführen und anschließend wieder in einen der Auffangbehälter für die einwandfreien oder für die mangelhaften Tabletten zuzuleiten. Allein mit einer solchen Einrichtung wird jedoch nicht dem Bedürfnis Rechnung getragen nach einer Anordnung für das Wiegen und gleichzeitige Abfüllen von gewogenen Einzeltabletten in Sammelbehältern, deren Befüllung fortlaufend die Tablettenproduktion begleitet, um die gewogenen Tabletten anschließend zu weiteren Kontrollzwecken zur Verfügung zu haben.

Die US-A-2 781 995 zeigt eine Einrichtung zum Abfüllen von Behältern, die radial einer rotierenden Lochscheibe zugestellt werden, um danach befüllt zu werden. Dazu ist eine Waage vorgesehen, die den Umlauf der Lochscheibe steuert, um sicher zu stellen, daß die einzelnen Behälter ausreichend befüllt sind, bevor ein nächster Behälter befüllt wird. Erfolgt eine Füllung eines Behälters beispielsweise mit Oliven, so werden nicht die einzelnen Oliven jeweils für sich gewogen, sondern nur die Gesamtmenge der in einem Behälter abgefüllten Oliven. Zum Zwecke der Kontrolle des Gewichtes einzelner Oliven oder anderer Teilchen ist diese Einrichtung nicht bestimmt und nicht geeignet. Das gleiche gilt für eine Anordnung nach der GB-A-1 571 270, bei der über die Waage der Antriebsmotor für eine mehrere Behälter tragende Lochscheibe betätigt wird, sobald ein bestimmtes Füllgewicht erreicht ist.

Aufgabe der Erfindung ist es, eine im Aufbau besonders einfache Einrichtung zum Entnehmen und Wiegen insbesondere von Tabletten zu schaffen, mit der fortlaufend während der Produktion von Tabletten einzelne entnommen und einzeln in einem Sammelbehälter gewogen werden können, die danach zu weiteren Kontrollzwecken zur Verfügung stehen.

Die Erfindung sieht dafür vor, daß der schwenkbare Arm für die Abführung einer einzelnen Tablette an seinem Kopf mit einem Käfig für die Aufnahme einer einzelnen Tablette versehen ist für eine Überführung in einen Behälter, der in einem Loch einer drehbar gelagerten Lochscheibe steht, die sich mit mehreren weiteren Behältern in einem Magazin befindet, dessen Boden eine Öffnung aufweist, in welcher der Teller einer Waage für einen Behälter liegt, und daß für die Schwenkbewegung des Armes mit dem Käfig ein Stellmotor vorgesehen ist und die Lochscheibe mit einem Antrieb für eine schrittweise Drehung entsprechend der Lochteilung der Lochscheibe versehen ist, der nach einer Drehbewegung eine Rückstellbewegung der Lochscheibe hervorruft.

Die Tabletten werden dabei nicht nur einzeln gewogen, sondern dies erfolgt bereits während ihrer Ansammlung in einem Sammelbehälter, in dem sie für nachfolgende Kontrollen oder zum Zwecke der Dokumentation zur Verfügung stehen. Die Wiegeergebnisse können in einem Rechner gespeichert oder gegebenenfalls über ein Druckwerk ausgedruckt werden zum Zwecke einer späteren Führung des Nachweises über die Qualität der Talbette oder auch zur Steuerung der Tablettenpresse im Sinne einer Veränderung des Preßkraftsollwertes bzw. der Tablettendicke.

Weitere Merkmale der Erfindung bilden Gegenstand von Unteransprüchen.

Die Erfindung ist nachstehend unter Bezugnahme auf eine Zeichnung erläutert. In der Zeichnung zeigen:

Figur 1:    die Entnahme- und Prüfeinrichtung in der Draufsicht;

Figur 2:    die Entnahme- und Prüfeinrichtung in der Seitenansicht;

Figur 3:    den Käfig für die Aufnahme einer Tablette in der Unteransicht;
Figur 4: den Käfig für die Aufnahme einer Tablette in der Seitenansicht bzw. im Schnitt und
Figur 5: einen Teilausschnitt der Steuerscheibe der Prüfeinrichtung.

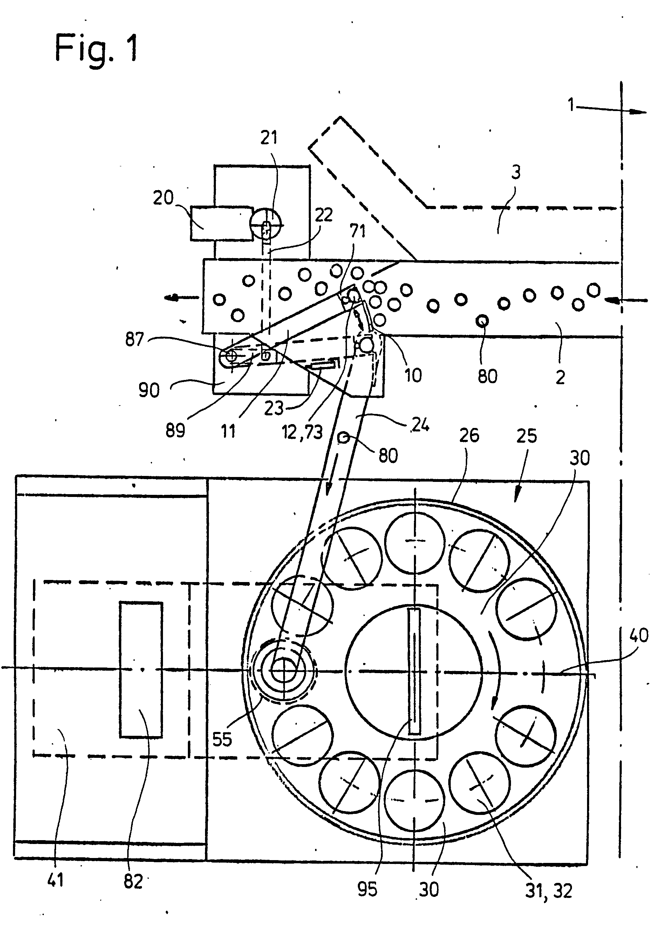

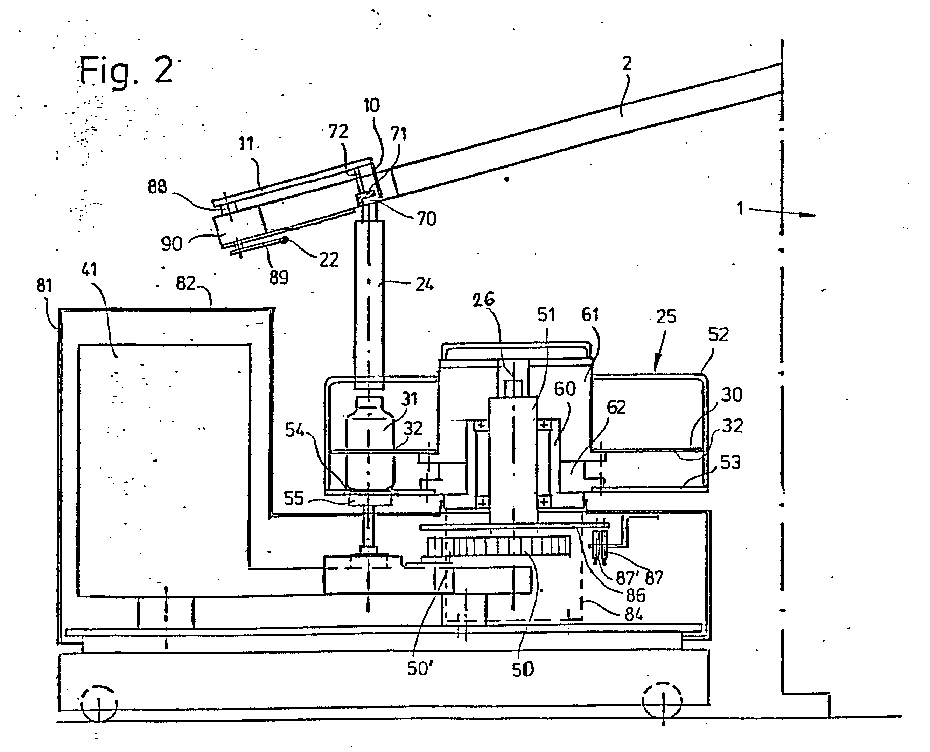

Bei der in den Figuren 1 und 2 wiedergegebenen Einrichtung befindet sich rechts neben der in strichpunktierter Linie wiedergegebenen Abgrenzung eine Tablettiermaschine 1 zur Herstellung von Tabletten 80, die in einem Teilchenstrom auf einer Rutsche 2 aus der Tablettiermaschine 1 herausgefördert werden.

Wird durch die Preßkraftüberwachung festgestellt, daß die Tabletten nicht den Anforderungen entsprechen, so werden sie abgeleitet über einen anderen Kanal 3.

Zur Entnahme von Stichproben ist ein schwenkbar gelagerter Arm 11 vorgesehen, der an seinem Kopf einen Käfig 12 für die Aufnahme einer einzelnen Tablette 80 trägt. Mit diesem Käfig 12 ist eine Stauwand 10 verbunden, die zusammen mit dem Arm 11 bzw. Käfig 12 in den Teilchenstrom hinein zu schwenken ist und aus diesem entsprechend den gestrichelten Linien in Figur 1 nach Entnahme einer einzelnen Tablette herauszuschwenken ist.

In dem eingeschwenkten Zustand laufen mehrere Tabletten 80 gegen die Stauwand 10, von denen eine einzige eingeleitet wird in die U-förmig gestaltete Ausnehmung 73 des Käfigs 12. Es handelt sich also nicht darum, ein ganz bestimmtes Teilchen aus dem Teilchenstrom zu entnehmen, sondern eines beliebigen Teilchens von mehreren, um danach die Qualität statistisch prüfen zu können.

Bei einer Tablettiermaschine 1 wird zwar bereits in der Maschine die Preßkraft gemessen, so daß davon abhängig auf das Gewicht der einzelnen Tablette geschlossen werden kann. Als zweckmäßig hat es sich jedoch gezeigt, wenn darüber hinaus noch durch Einzelüberprüfungen mittels einer Waage die Korrelation zwischen diesen beiden Größen überwacht wird.

Für die Stellbewegung des schwenkbaren Armes 11 ist ein Motor 20 vorgesehen, der eine Scheibe 21 in Rotation versetzt, auf welcher exzentrisch eine Schub- und Zugstange drehbar gelagert ist, die den Arm 11 hin und her schwenkt. Bei einer Umdrehung der Scheibe 21 wandert der Arm aus der gestrichelt wiedergegebenen Ausgangsstellung in die in ausgezogenen Linien in Figur 1 wiedergegebene Arbeitsstellung und wieder zurück. Das Ein- und Abschalten des Motors 20 wird gesteuert über einen Näherungsinitiator 23, der von dem Arm 11 in der Ruhelage betätigt ist.

Das Ziehen bzw. Entnehmen einzelner Tabletten erfolgt nach echter Zufallswahrscheinlichkeit, wobei die Anzahl der Tabletten für eine Probe und der Beginn der Ziehung der Proben als Parameter vorgewählt werden.

Nach dem Ziehen wird jede Tablette einzeln gewogen und das Ergebnis in einem angeschlossenen Rechner verarbeitet. Dabei kann das gemessene Gewicht auf einem Display angezeigt werden oder ausgedruckt werden. Dazu lassen sich in einem Produktionsprotokoll die einzelnen Daten, die Zeit und die Zahlen der gepreßten Tabletten sowie der Preßkraftwerte, der Maximal- und Minimalgewichtswerte der Tabletten dieser Probe sowie die Zahlen von Tabletten, die außerhalb zweier vorgegebener Grenzen liegen, ausdrucken.

Nach der Entnahme einer einzelnen Tablette 80 wird diese aus dem sich in Ausgangsstellung befindlichen Käfig 12 auf eine schräg nach unten gerichtete Rutsche 24 ausgegeben, auf der sie in einen Behälter 31 gefördert wird, der in einem Loch 32 einer Lochscheibe 30 steht, die in einem Magazin 26 liegt, das Bestandteil der Prüfeinrichtung 25 bildet.

Die Lochscheibe 30 weist elf Löcher für die Aufnahme von elf Behältern 31 auf, die nach einer zwölfer-Einteilung angeordnet sind unter Fortlassung eines Loches 32 in dem sogenannten Leerstellenbereich 40.

Die Lochscheibe 30 läßt sich im Uhrzeigersinn in Rotation versetzen, wobei die einzelnen elf Behälter mitgenommen werden und der Reihe nach über eine Waage 41 gefördert werden. Der Boden der Behälter 31 gleitet bei einer Rotation der Lochscheibe 30 auf den Boden 53 des Gehäuses 52 vom Magazin 26. In diesem Boden 53 befindet sich eine Öffnung 54, in welcher der Teller 55 einer Waage 41 für die Behälter mit Inhalt liegt.

Der Antrieb der Lochscheibe 30 erfolgt über einen Stellmotor 84 entsprechend Figur 2, sowie ein Zahnrad 50 im Zusammenwirken mit einem Getriebe 50' über die Antriebswelle 51.

Die Behälter 31 können mit einer oder mit mehreren Tabletten befüllt werden. In der Regel erfolgt eine Befüllung mit mehreren Tabletten, die einzeln gewogen werden. Dafür wird zunächst der Behälter 31 auf der Waage im leeren Zustand gewogen. Danach wird die Waage auf Null gestellt, so daß eine nachfolgend eingegebene Tablette allein gewogen und das Ergebnis zu registrieren ist. Bei der Befüllung mit mehreren Tabletten erfolgt nach Auswiegung jeder Tablette eine Taraelimination, das heißt vor dem Wiegen jeder einzelnen Tablette wird ein neuer Tarawert gebildet.

Nach dem Befüllen eines Behälters 31 mit einer Tablette oder einer Vielzahl von Tabletten 80 wird die Lochscheibe 30 des Magazins 26 in Richtung des Pfeiles, das heißt im Uhrzeigersinn in Rotation versetzt, damit ein nächster Behälter 31 auf der Waage zum Einsahz kommen kann. Da nach einen Stillsetzen des Antriebsmotors noch eine Berührung der Lochscheibe 30 mit dem Behälter 31 besteht, ist vorgesehen, daß die Lochscheibe 30 nach einer Förderung eines Behälters 31 auf den Teller 55 der Waage in einem geringen Ausmaß zurückgedreht wird, so daß der Rand des Loches 32 frei ist vom Behälter 31 und dieser nicht in der Ermittlung seines genauen Gewichtes behindert ist.

Sind alle elf Behälter befüllt, so lassen sich diese gemeinsam mit dem Magazin 26 und seiner Lochscheibe 30 gegen ein anderes Magazin mit weiteren elf Behältern austauschen. Dieses wird dabei so eingesetzt, daß sich der Leerstellenbereich 40 abweichend von der Darstellung in Figur 1 über der Waage bzw. dem Waageteller 55 befindet, als Ausgangsstellung für den Einsatz eines ersten zu wiegenden Behälters.

Die Lochscheibe 30 ist verbunden mit einem Tragkörper 61, der auf einem Lagerkörper 60 ruht und sich auf einem Ring 62 abstützt.

Die elektronische Waage 41 steht neben dem Magazin 26 in einem Gehäuse 81, das mit einem Fenster 82 versehen ist.

Für die Steuerung des Antriebes des Magazins und insbesondere der Lochscheibe 30 mit den Behältern 31, ist eine Steuerscheibe 86 vorgesehen, die mit zwei Näherungsinitiatoren (NI) 87 und 87' zusammenwirkt.

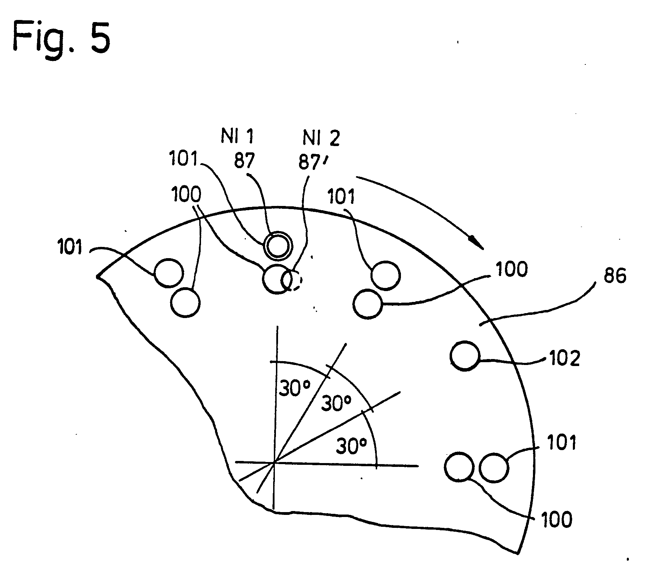

Entsprechend der Figur 5 ist die Steuerscheibe 86, die dort nur im Ausschnitt in der Draufsicht wiedergegeben ist, mit mehreren Paaren von Löchern 100 und 101 versehen, von denen die zwei Löcher 100 und 101 eines Paares radial versetzt zueinander angeordnet sind, wobei die außenliegenden Löcher 101 auf einem gemeinsamen Kreis und ebenso die innenliegenden Löcher 100 auf einem gemeinsamen Innenkreis liegen. Die Aufteilung in der Anordnung der Löcher ist die gleiche entsprechend der Anordnung der Löcher in der Lochscheibe 30, das heißt entsprechend der zwölfer-Teilung, wobei jedoch lediglich elf Paare von Löchern 100 und 101 vorgesehen sind und in dem zwölften Bereich nur ein außenliegendes Loch 102, das auf dem Kreis der Löcher 101 angeordnet ist.

Unterhalb der Steuerscheibe 86 stehen zwei radial versetzt zueinander angeordnete Näherunginitiatoren 87 und 87', von denen der innenstehende Näherungsinitiator 87' in Umlaufrichtung gesehen, um ein geringes Ausmaß hinter dem außenstehenden Näherungsinitiators 101 angeordnet ist. Bei diesen Näherungsinitiatoren 87 und 87' handelt es sich um handelsübliche Schalter, die berührungslos arbeiten für die Steuerung der Lochscheibe 30, d. h. für eine Stillsetzung der Lochscheibe 30 nach einem Transport eines Behälters auf die Waage und für eine anschließende Rückdrehung der Lochscheibe zur Freistellung des zu wiegenden Behälters 31. Dazu dienen die außenliegenden Löcher 101 der Steuerscheibe 86 der Betätigung des ersten Initiators 87 und die innenliegenden Löcher 100 des innenstehenden zweiten Initiators 87'.

Befindet sich der Leerstellenbereich 40 der Lochscheibe 30 nach Einsatz eines Magazins im Bereich des Waagetellers 55, so liegt das einzelne Loch 102 über dem äußeren Näherungsinitiator 87, so daß dieser nicht bedämpft wird und deshalb den Pegel "low" (L) hat im Gegensatz zu dem anderen Initiator 87', der wegen des Fehlens eines Loches bedämpft wird und sich in der Stellung "high" (H) befindet. Nach Aufgabe eines Impulses an den Motor 84 zum Drehen, d. h. zum Einleiten der ersten Bewegungsphase werden beide Initiatoren 87 und 87' bedämpft und stehen unter "H". Bewegt sich die erste Öffnung der Lochscheibe 30 über den Waageteller 55, so geht zunächst der äußere Näherungsinitiator 87 auf "low" (L), während der zweite Näherungsinitiator 87' noch auf "H" steht, weil dieser zweite Näherungsinitiator 87' in der Richtung der Umdrehung weiter versetzt ist. Das entspricht dem Signal "Motor stop". Durch einen zwangsläufigen Nachlauf bis zum Stillstand gelangt das zweite Loch 100 über den zweiten Initiator 87' und versetzt diesen in die Stellung "L". Das löst den Impuls aus für die Rückstellung des Motors 84 zur Rückstellung der Lochscheibe 30, so daß sich wieder die Stellung ergibt für den ersten Näherungsinitiator 87 = "L" und den zweiten Näherungsinitiator 87' = "H". Das bedeutet ein Stop des Motors 84 bzw. der Lochscheibe 30 in einer Stellung, in der die Ränder der Öffnung der Lochscheibe 30 frei sind von einer Berührung der Wandung des auf der Waage 41 stehenden Behälters, so daß eine genaue Messung durchgeführt werden kann. Dieser Vorgang wiederholt sich bis zu dem Zeitpunkt, zu dem die Steuerscheibe 86 mit nur einem Loch 102 über dem außenliegenden Initiator 87 steht und eine endgültige Stillsetzung der Einrichtung hervorruft. Der Vorgang der Beförderung der Behälter wiederholt sich also elf Mal fortlaufend bis es bei einem zwölften Mal zu einem völligen Stillstand kommt.

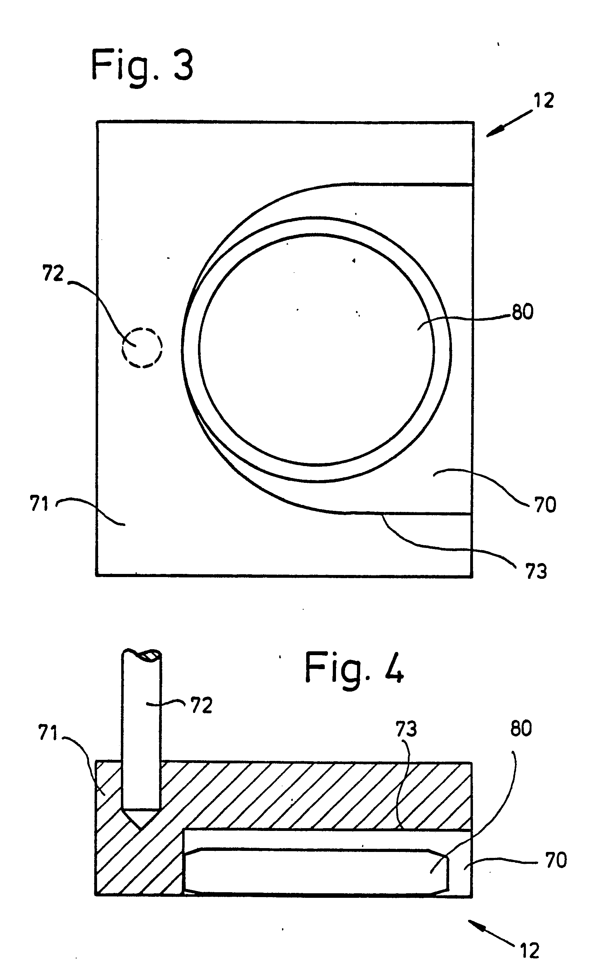

Den Figuren 3 und 4 ist deutlicher die Beschaffenheit des Käfigs 12 zu entnehmen. Dieser besteht aus einem Fangblech 71, das eine an ihrem Rand U-förmig gestaltete Kammer 70 begrenzt und auf der Oberseite abdeckt. Der Käfig 12 ist mit einer Stange 72 versehen, welche ihn mit dem Arm 11 verbindet. Der Arm 11 ist mit einer Achse 88 verbunden, die in einem Tragkörper 90 gelagert ist und einen Hebel 89 trägt, der an die Zug- und Schubstange 22 angeschlossen ist.

Die vorbeschriebene Einrichtung nach der Erfindung ist in ihrer Anwendung nicht beschränkt auf die Entnahme von Tabletten zur Prüfung durch Wiegen, sondern auch geeignet beispielsweise für die Prüfung von Werkstücken wie Schrauben, Muttern oder dergleichen.

Eine weitere Steuerungsmöglichkeit der Lochscheibe 30 mit Hilfe der Steuerscheibe 86 und der Näherungsinitiatoren ist folgende: Während der Drehung der Lochscheibe 30 und damit auch der Steuerscheibe 86 stehen beide Näherungsinitiatoren NI 1 und NI 2 auf "high" (H). Als erstes kommt der NI 1 auf "low" (L). Dieses Signal kann dazu benutzt werden, die Durchgangsgeschwindigkeit zu verringern. Wenn dann der NI 2 ebenfalls auf "low" geht, wird die Drehrichtung umgekehrt. Die Rückdrehung wird

gestopt, wenn NI 1 und NI 2 wieder den "high Pegel" erreichen. Nun steht der Behälter 31 frei auf der Waage 41, ohne daß die Lochscheibe 30 den Behälter 31 berührt. Bei einem erneuten Start wird der sofort entstandene "low Pegel" des Näherungsinitiators beispielsweise durch ein Zeitrelais unwirksam gemacht.

Dieser Vorgang wiederholt sich bis zu dem Zeitpunkt, zu dem die Steuerscheibe 86 mit nur einem Loch 102 über dem NI 1 steht. Da durch das fehlende Loch der NI 2 nicht "low" erreichen kann, erfolgt keine Rückführung sondern nach Ablauf einer einstellbaren Zeit der Vorlagestillstand.

Diese Steuerungsmöglichkeit hat den Vorteil, daß der Motornachlauf nach dem Abschalten, der reibungsabhängig ist, ersetzt wird durch eine Drehung mit geringerer Drehzahl, und daß die Rückdrehung durch den Versatz der Näherungsinitiatoren NI 1 und NI 2 auf ein bestimmtes Maß festgesetzt wird, so daß der Rand des Loches 32 der Lochscheibe 30 rundum einen etwa gleichmäßigen Abstand zum Behälter 31 erhält.

## Patentansprüche

1. Einrichtung zum Entnehmen und Wiegen insbesondere von Tabletten mit einem in den Tablettenstrom schwenkbaren Arm (11) für die Abführung einzelner Tabletten (80) in einen Behälter (31), dadurch gekennzeichnet, daß der Arm (11) an seinem Kopf mit einem Käfig (12) für die Aufnahme einer einzelnen Tablette (80) versehen ist für die Überführung in den Behälter (31), der in einem Loch (32) einer drehbar gelagerten Lochscheibe (30) steht, die sich mit mehreren weiteren Behältern (31) in einem Magazin (26) befindet, dessen Boden (53) eine Öffnung (54) aufweist, in welcher der Teller einer Waage (41, 55) für einen Behälter (31) liegt, und daß für die Schwenkbewegung des Armes (11) mit dem Käfig (12) ein Stellmotor (20) vorgesehen ist und die Lochscheibe (30) mit einem Antrieb (50, 50', 84) für eine schrittweise Drehung entsprechend der Lochteilung der Lochscheibe (30) versehen ist, der nach einer Drehbewegung eine Rückstellbewegung der Lochscheibe (30) hervorruft.

2. Einrichtung nach Anspruch 1, dadurch gekennzeichnet, daß für die Steuerung des Antriebes (50, 50', 84) der Lochscheibe (30) eine Steuerscheibe (86) auf der Antriebswelle (51) angeordnet ist, die mit Löchern (100, 101, 102) zum Schalten von Näherungsintitiatoren (87, 87') versehen ist.

3. Einrichtung nach Anspruch 2, dadurch gekennzeichnet, daß in der Steuerscheibe (86) entsprechend der Lochteilung der Lochscheibe (30) jeweils zwei Löcher (100, 101) radial versetzt angeordnet sind, die mit zwei entsprechend radial versetzten Näherungsinitiatoren (87, 87') zusammenwirken.

4. Einrichtung nach Anspruch 3, dadurch gekennzeichnet, daß die beiden Näherungsinitiatoren (87, 87') in Drehrichtung der Steuerscheibe (86) hintereinanderliegend angeordnet sind.

5. Einrichtung nach Anspruch 3, dadurch gekennzeichnet, daß in der Steuerscheibe (86) zwischen zwei Paaren von Löchern (100, 101) nur ein einzelnes Loch (102) entsprechend der Lochteilung der Lochscheibe (30) angeordnet ist.

6. Einrichtung nach Anspruch 5, dadurch gekennzeichnet, daß das Einzelloch (102) der Steuerscheibe (86) um 180° versetzt angeordnet ist zu einem Leerstellenbereich (40) der Lochscheibe (30).

## Claims

1. Device for withdrawing and weighing especially for tablets with an arm (11) swinging into the stream of tablets for the carrying off of single tablets (80) into a container (31), characterized in that the arm (11) is supplied at its head with a cage (12) for the reception of a single tablet (80) for the conveying into the container (31) which stands in a hole (32) of a rotatable perforated disk (30) which is in a magazine (26) with several other containers (31), the bottom (53) of which has an orifice (54) in which lies the pan of scales (41, 55) for a container (31) and in that a servodrive (20) is foreseen for the swinging of the arm (11) with the cage (12) and that the perforated disk (30) is provided with a gear (50, 50', 84) for the gradual rotation accordingly to the hole distribution of the perforated disk (30) which causes a reset motion of the perforated disk (30) after a complete rotation.

2. Device according to claim 1, characterized in that a control disk (86) is placed on the driving shaft (51) for the control of the gear (50, 50', 84) of the perforated disk (30), control disk which is provided with holes (100, 101, 102) to switch proximity switches (87, 87').

3. Device according to claim 2, characterized in that respectively two holes are radially displaced in the control disk (86) accordingly to the hole distribution of the perforated disk (30), holes which cooperate with two proximity switches (87, 87') radially displaced accordingly.

4. Device according to claim 3, characterized in that both proximity switches (87, 87') are placed one after another in the rotating direction of the control disk (86).

5. Device according to claim 3, characterized in that only one single hole (102) is placed in the control disk (86) between two pairs of holes (100, 101) according to the hole distribution of the perforated disk (30).

6. Device according to claim 5, characterized in that the single hole (102) of the control disk (86) is displaced through 180° relatively to an empty place zone (40) of the perforated disk (30).

**Revendications**

1. Dispositif de prélèvement et pesage, notamment de comprimés, avec un bras (11) pivotant dans le flux de comprimés pour la sortie de comprimés (80) isolés dans un récipient (31), caractérisé en ce que le bras (11) est pourvu à sa tête d'une cage (12) pour le logement d'un seul comprimé (80) pour le transfert dans un récipient (31) qui se trouve dans un trou (32) d'un disque perforé (30), positionné de manière rotative, qui se trouve dans un magasin (26) avec plusieurs autres récipients (31), magasin dont le fond (53) présente un orifice (54) dans lequel se trouve le plateau d'une balance (41, 55) pour un récipient (31) et qu'un moteur de commande (20) est prévu pour le pivotement du bras (11) avec la cage (12) et que le disque perforé (30) est pourvu d'une commande (50, 50', 84) pour une rotation pas à pas conformément à la répartition des trous du disque perforé (30), commande qui provoque un mouvement de rappel du disque perforé (30) après qu'une rotation ait été effectuée.

2. Dispositif selon la revendication 1, caractérisé en ce qu'un disque de commande (86) est placé sur l'arbre moteur (51) pour la commande de la commande (50, 50', 84) du disque perforé (30), disque de commande qui est pourvu de trous (100, 101, 102) pour commuter des commutateurs capacitifs (87, 87').

3. Dispositif selon la revendication 2, caractérisé en ce que dans le disque de commande (86) conformément à la répartition des trous du disque perforé (30) deux trous (100, 101) sont respectivement placés en étant décalés radialement, trous qui coopèrent avec deux commutateurs capacitifs (87, 87') décalés radialement de manière correspondante.

4. Dispositif selon la revendication 3, caractérisé en ce que les deux commutateurs capacitifs (87, 87') sont placés l'un derrière l'autre dans le sens de rotation du disque de commande (86).

5. Dispositif selon la revendication 3, caractérisé en ce qu'un seul trou (102) est placé dans le disque de commande (86) entre deux paires de trous (100, 101) conformément à la répartition des trous du disque perforé (30).

6. Dispositif selon la revendication 5, caractérisé en ce que le trou isolé (102) du disque de commande (86) est placé en étant décalé de 180° par rapport à une zone d'espace libre (40) du disque perforé (30).

# Fig. 1

Fig. 2

EP 0 181 946 B1

# Fig. 3

# Fig. 4

# Fig. 5